# EUROPÄISCHE PATENTSCHRIFT

(11) **EP 1 363 012 B1**
(45) Veröffentlichungstag und Bekanntmachung des Hinweises auf die Patenterteilung: **06.02.2008**
(21) Anmeldenummer: 03010656.1
(22) Anmeldetag: 13.05.2003
(51) Int. Cl.: F02M 25/07, F16K 11/052

(54) **Abgaswärmetauscher mit Ventil**
Exhaust gas heat exchanger with valve
Echangeur de chaleur de gaz d'échappement avec soupape

(30) Priorität: 15.05.2002 HU 0200144 U; 26.07.2002 DE 10234185
(43) Veröffentlichungstag der Anmeldung: 19.11.2003
(73) Patentinhaber: Behr GmbH & Co. KG, 70469 Stuttgart (DE)
(72) Erfinder: Mercz, Jozsef, 73525 Schwäbisch Gmünd (DE); Szabo, András, 1025 Budapest (HU); Toth, Gyula, 1037 Budapest (HU)
(74) Vertreter: Grauel, Andreas

(56) Entgegenhaltungen:
- EP-A- 1 030 050
- EP-A- 1 273 786
- DE-A- 3 711 352
- DE-A- 10 104 228
- PATENT ABSTRACTS OF JAPAN vol. 010, no. 115 (M-474), 30. April 1986 (1986-04-30) & JP 60 245881 A (MATSUSHITA DENKI SANGYO KK), 5. Dezember 1985 (1985-12-05)

## Beschreibung

Die vorliegende Erfindung betrifft ein Schaltventil, wie es beispielsweise für Abgaswärmetauscher verwendet werden kann. Auch betrifft die Erfindung einen Abgaswärmetauscher mit einem solchen Schaltventil.

Es ist, beispielsweise aus der gattungsgemäß zugrundegelegten EP 1 030 050 A1, bekannt, im Bereich der Abgasrückführleitung einer Brennkraftmaschine ein Schaltventil anzuordnen, das den Abgasstrom wahlweise durch einen Kühler oder durch eine Bypassleitung leitet. Bei dem Schaltventil ist als Ventilsteller, also als lageveränderliches Bauteil, das den Abgasstrom wahlweise zu einem der beiden Auslasse des Schaltventils leitet und den anderen Auslass absperrt, eine schwenkbare Klappe vorgesehen.

Darüber hinaus ist aus der EP 1 111 227 A2 ein Abgasrückführventil bekannt. Das Abgasrückführventil dient dem Freischalten eines Ventildurchlasses, der einen Teilstrom des Abgasstromes zur Luftansaugung zurückführt. Dabei wird in der EP 1 111 227 als Ventilsteller ein Tellerventil verwendet, das einen kreisförmigen Ventilteller aufweist, wobei einerseits des Ventiltellers zentrisch ein Ventilschaft senkrecht abragt.

Aufgabe der Erfindung ist es ein einfach herzustellendes, variables und betriebssicheres Schaltventil zu schaffen, das auswählbar den Strömungspfad von einem Einlass zu zwei Auslassen schaltet.

Diese Aufgabe der Erfindung wird durch ein Schaltventil mit den Merkmalen des Anspruchs 1 gelöst.

Bei einem Schaltventil, wie es insbesondere für Abgaswärmetauscher Verwendung finden kann, sind ein Ventileinlass und zwei Ventilauslasse in einem Ventilgehäuse ausgebildet. Das Schaltventil dient dem Durchleiten einer Fluidströmung, insbesondere einer Abgasströmung. Gemäß der Erfindung ist als Ventilsteller, der die Fluidströmung auf die Ventilauslasse verteilt, ein Tellerventil vorgesehen, der im Ventilgehäuse geführt gehalten ist. Dabei besteht das Tellerventil aus einem Ventilschaft und einem Ventilteller. Zwischen der Flächennormalen des Ventiltellers und dem Ventilschaft ist ein Winkel gegeben.

Ein solches erfindungsgemäßes Schaltventil hat den Vorteil, dass es einfach herzustellen ist und kompakt ausgebildet sein kann. Es ist bei konstruktiv gleicher Ausbildung in der Lage, sowohl als Schaltventil mit lediglich 2 Schaltzuständen oder als Proportionalventil zu dienen. Gleichzeitig ist das Ventil geeignet, hohen thermischen Belastungen ausgesetzt zu werden. Auch ein Regenerieren des Ventils von Ablagerungen, beispielsweise von Rußablagerungen im Bereich des Ventilgehäuses, durch im Ventilgehäuse stattfindende selbstzündende Verbrennungsprozesse ist möglich.

Dabei liegt der Winkel zwischen der Flächennormalen des Ventiltellers und dem Ventilschaft gemäß Ausgestaltungen der Erfindung im Bereich zwischen 20° und 80°, vorzugsweise im Bereich von 45° bis 85°. Die Neigung des Ventiltellers gegenüber der Ausrichtung des Ventilschaftes hat wesentlichen Einfluß auf den im Ventilgehäuse dafür erforderlichen Bauraum. Je größer der Winkel ist desto flacher ist der Ventilteller gegenüber einer zum Ventilschaft normalen Ebene ausgerichtet. Dadurch wird die für den Ventilteller erforderliche Bauhöhe reduziert. Gleichzeitig ist die Neigung jedoch ein Maß für die Fläche, auf welcher der Ventilteller lateral an- oder abgeströmt werden kann, und somit ein Maß für den hierbei möglichen Volumenstrom des Fluids. Die Neigung wird also bei der Konstruktion des Ventils vorzugsweise an die spezifischen Erfordernisse angepaßt. Es können auch Standardteile mit unterschiedlichen Winkeln und Einlass- sowie Auslassflächen konstruiert und für eine Vielzahl von Anwendungen angeboten werden. Hierbei empfehlen sich beispielsweise insbesondere Werte des Winkels von 75°, 60°, 45° und 30°.

Eine vorteilhafte Ausgestaltung der Erfindung sieht vor, dass der Ventilteller merchanisch bearbeitete, wie beispielsweise geschliffene, Kanten aufweist. Da die geschliffenen Kanten des Ventiltellers ventilgehäusesseitige Oberflächen bestreichen, werden dabei eventuell vorhandene Ablagerungen abgeschabt. Weder die Dichtheit des Ventils gegenüber dem Gehäuse noch die Beweglichkeit des Ventils im Ventilgehäuse werden also durch solche Ablagerungen beeinträchtigt. Dies gilt insbesondere für die bei der Verwendung in Verbindung mit Abgasströmen einer Brennkraftmaschine auftretenden Rußablagerungen.

Gemäß bevorzugter Ausgestaltung der Erfindung ist der Ventilteller in einem Schaltring des Ventilgehäuses angeordnet. Der Schaltring ist gemäß der Ausgestaltung koaxial zur Mittelachse des Ventilschafts ausgerichtet. Er weist eine fassförmig gewölbte Innenfläche auf, an der die Kante des Ventiltellers anliegt. In den Schaltring münden, beabstandet voneinander, der Ventileinlass sowie den Ventilauslassen zugeordnete Ventilkammern des Ventilgehäuses, die den Fluidstrom in den jeweiligen Ventilauslass überleiten.

Zwischen dem Ventileinlass und den beiden Ventilauslassen ist dabei vorzugsweise jeweils ein Winkel von 90°, 180° oder einem anderen Winkel gegeben. Die beiden Auslasse sind vorzugsweise einander gegenüberliegend angeordnet. Dies wird insbesondere dadurch erreicht, dass die beiden Auslasse in der Ebene des Schaltrings liegen und der Einlass in einer der vom Schaltring begrenzten Endflächen liegt, oder aber dadurch, dass der Einlass in der Ebene des Schaltrings liegt und die beiden Auslasse in den vom Schaltring begrenzten Endflächen liegen. Die Kante des Ventiltellers liegt vorzugsweise über ihre gesamte Umfangslänge an der gewölbten Innenfläche an. Sie trennt daher die beiden Ventilkammern fluidisch voneinander.

Der Ventilschaft des Tellerventils ist gemäß vorteilhafter Ausgestaltung in einem Ventilführungsrohr des Ventilgehäuses geführt gehalten, welches sich koaxial zum Schaltring erstreckt. Der Ventilschaft ist im Ventilführungsrohr vorzugsweise um seine Mittelachse herum verschwenkbar gehalten. Durch diese Maßnahme ist das Tellerventil zwar hinsichtlich seiner Stellbewegung beweglich gehalten, aber in definierter Ausrichtung geführt. Die Führung des Tellerventils am Ventilschaft sichert das Ventil gegen Verklemmen in einer Betätigungslage und erhöht dadurch die Betriebssicherheit des Schaltventils. In weiterführender Ausgestaltung kann es dabei vorgesehen sein, dass am Ventilschaft ein Bund ausgebildet ist, der insbesondere radial vom Ventilschaft abragt. Der Bund liegt, vorzugsweise in axialer Richtung kraftbeaufschlagt, an einer Anlagefläche des Ventilführungsrohrs spaltfrei an. Hierdurch wird eine Dichtwirkung gegenüber dem Fluidstrom geschaffen, so dass Eindringen von Fluid in den für die Drehbewegung des Ventilschaftes im Ventilführungsrohr erforderlichen Spalt weitgehend verhindert wird. Es wird insbesondere der Eintrag von mit dem Fluid mittransportierten Verunreinigungen, die den Spalt zusetzen und damit eine Ventilbetätigung erschweren oder verhindern könnten, vermieden. Um ein Leckagestrom durch das Ventilführungsrohr zu vermeiden, kann darüber hinaus eine Dichtung zwischen Ventilführungsrohr und Ventilschaft angeordnet sein.

Das Ventilführungsrohr durchsetzt vorzugsweise sowohl eine Ventilkopftrennwand und eine Gehäusetrennwand. Die Ventilkopftrennwand und die Gehäusewand umschließen dabei eine Wasserkammer, die von einer Kühlflüssigkeit durchströmt wird. Die Ventilkopftrennwand trennt eine der Ventilkammern von der Wasserkammer, während die Gehäusetrennwand Teil des das Schaltventil nach Außen begrenzenden Ventilgehäuses ist. An der Gehäusetrennwand können nach verschiedenen Richtungen hin ausgerichtete Kühlflüssigkeitsaustrittsöffnungen ausgebildet sein, von denen in der Regel nur eine verwendet wird, während die anderen fluiddicht verschlossen werden. Durch die in der Wasserkammer zirkulierende Kühlflüssigkeit wird zum Einen das Ventilgehäuse zum Anderen aber auch das die Wasserkammer durchsetzende Ventilführungsrohr sowie mittelbar der Ventilschaft gekühlt. Dies schützt die Bauteile des Schaltventils vor thermischer Überlastung, wenn das durch das Schaltventil strömende Fluid sehr heiß ist, wie es beispielsweise bei Abgasen einer Brennkraftmaschine der Fall ist. Das Ventilgehäuse und die im Ventilgehäuse angeordneten Bauteile unterliegen geringeren thermischen Belastungen aufgrund der Kühlung. Dies trägt zur Funktionssicherheit und Lebensdauer des Schaltventils bei. Dies gilt insbesondere für eine zwischen Ventilschaft und Ventilführungsrohr anordenbare Dichtung. Eine solche kann gemäß bevorzugter Ausführungsform in einer Nut des Ventilführungsrohres gehalten sein. Dabei ist die Dichtung insbesondere im Bereich der Wasserkammer im Ventilführungsrohr gehalten. Hierdurch ist die thermische Belastung der Dichtung erheblich reduziert. Es können auch aus thermoplastischen Materialien hergestellte Dichtungen verwendet werden, obgleich die das Schaltventil durchströmenden Fluide Temperaturen aufweisen können, die erheblich oberhalb von 200°C und damit oberhalb möglicher Verwendungstemperaturen von Thermoplasten liegen. Dennoch ist es von Vorteil, wenn bei entsprechender thermischer Belastung des Schaltventils die Dichtung zur Sicherheit aus temperaturbeständigen Materialien, wie beispielsweise Simrit 83 FKM 592, hergestellt ist.

Das Schaltventil kann insbesondere mittels einem ansteuerbaren Steller, der vorzugsweise eine lineare Stellbewegung ausführt, z.B. einer Unterdruckdose, betätigt werden. Hierzu greift eine Betätigungsstange, die einerseits mit dem linear arbeitenden Steller verbunden ist, andererseits an einem Betätigungshebel an, der radial abragend am Ventilschaft befestigt ist. Hierdurch kann eine Drehbewegung des Ventilschaftes um seine Mittelachse erzeugt werden. Die Betätigung kann dabei insbesondere gegen die Wirkung einer Drehfeder, die einerseits am Betätigungshebel und andererseits am Ventilgehäuse gehalten ist, erfolgen. Mittels der Drehfeder ist das Tellerventil in Richtung einer Betätigungsausgangslage beaufschlagt, die beispielsweise über einen entsprechend am Ventilgehäuse angeformten Anschlag festgelegt ist. Die Betätigungsausgangslage entspricht dabei vorzugsweise einer Stellung des Tellerventils, in welcher der Strömungspfad von dem Ventileinlass zu einem Ventilauslass vollständig unterbrochen ist, während der Strömungspfad zum anderen Ventilauslass vollständig geöffnet ist. In vorteilhafter Ausgestaltung der Drehfeder ist diese als Spiralfeder ausgebildet, deren Federspirale um den Ventilschaft herum angeordnet ist. Es können jedoch auch andere Federn oder allgemein Kraftspeicher Anwendung finden. Durch eine geeignete Abstützung am Ventilschaft bzw. am Betätigungshebel kann der Ventilschaft in axialer Richtung kraftbeaufschlagt werden, und zwar in Richtung des Herausziehens des Ventilschaftes aus dem Gehäuse. Hierdurch wird eine besser definierte Positionierung des Tellerventils im Ventilgehäuse erreicht. Darüber hinaus kann hierdurch auch die axiale Kraftbeaufschlagung zum Aufrechterhalten der spielfreien Anlage des Bundes an einer Anlagefläche erzeugt werden.

Das Tellerventil kann einen Schwenkwinkel von bis zu 180° zwischen der Betätigungsausgangslage und der Betätigungsendlage aufweisen. Es sind auch Ausgestaltungen möglich, bei denen der Betätigungswinkel kleiner als 180° ist, insbesondere aber in einem Bereich zwischen 150° und 180° liegt.

Entsprechend dem Betätigungswinkel zwischen Betätigungsendlage und Betätigungsausgangslage ist die Öffnungsweite des Ventileinlasses im Schaltring, oder wenn die Ventilauslasse im Schaltring ausgebildet sind, kleiner als 180°, die Öffnungsweite liegt beispielsweise bei 150°. Damit bei voller Betätigung des Tellerventils komplett zwischen den beiden Ventilauslassen umgeschaltet werden kann, muß die Öffnungsweite geringer sein, als der maximale Schwenkwinkel des Tellerventils.

Ein erfindungsgemäßes Schaltventil kann sowohl als Proportionalventil als auch als Zwei-Stellungsventil, das alternativ die Betätigungsausgangslage oder die Betätigungsendlage einnimmt, ausgeführt sein.

Die erforderlichen Betätigungskräfte für das Tellerventil können sehr niedrig gehalten werden. Sie können, abhängig von der Ausbildung der Drehfeder, insbesondere im Bereich um wenige Newton, beispielsweise im Bereich von 1 N bis 2 N liegen. Bei anderen Ausführungsbeispielen kann die Rückstellkraft jedoch auch größer oder kleiner gewählt werden.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen, wie sie in den beigefügten Ansprüchen definiert ist.

Die Erfindung ist anhand eines Ausführungsbeispieles in der Zeichnung schematisch dargestellt und wird im folgenden unter Bezugnahme auf die Zeichnung ausführlich beschrieben; dabei zeigt:
- Figur 1: ein erfindungsgemäß ausgestaltetes Tellerventil;
- Figur 2: in teilgeschnittener Darstellung ein Ventilgehäuse eines erfindungsgemäßen Schaltventils; und
- Figur 3: in teilgeschnittener Darstellung die Anordnung eines erfindungsgemäßen Schaltventils an einem Abgaswärmetauscher;

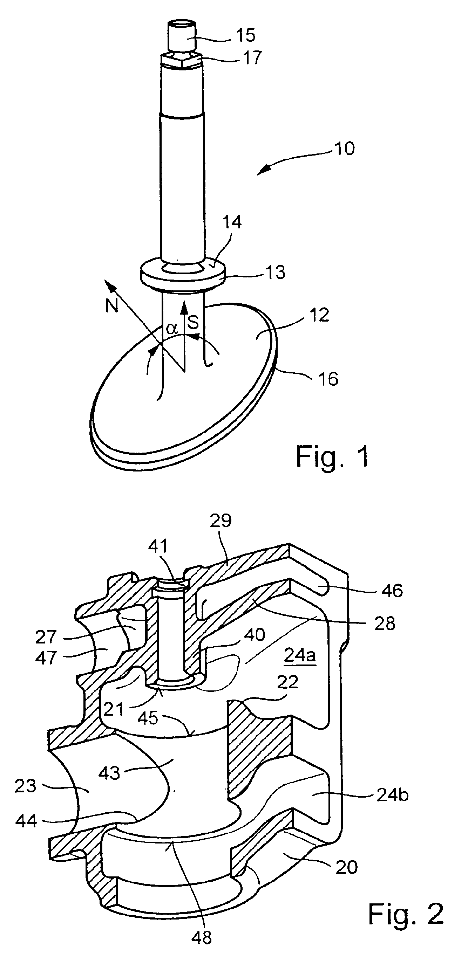

Die Figur 1 zeigt ein erfindungsgemäß ausgestaltetes Tellerventil 10. Das Tellerventil besteht aus dem Ventilschaft 11 und dem Ventilteller 12. Das Ventilteller 12 verfügt über geschliffene Kanten, die im Schaltring des Ventilgehäuses 20 geführt werden und an diesem dichtend anliegen. Am Ventilschaft 11 ist ein radial abragender Bund 13 ausgebildet, dessen Radialfläche 14 in spaltfreie Anlage mit einer Anlagefläche 21 des Ventilgehäuses gebracht werden kann. An dem Ende des Ventilschaftes, das dem Ventilteller 12 gegenüberliegt, ist ein Gewinde 15 zur Befestigung eines Betätigungshebels 30 ausgebildet, wobei am Ventilschaft 12 benachbart zum Gewinde 15 ein Formsegment 17 gegeben ist, das ein verdrehsicheres Festlegen des Betätigungshebels am Gewindeschaft ermöglicht.

Der Gewindeschaft 11 fußt im Mittelpunkt des Ventiltellers 12. Die Flächennormale N des Ventiltellers 12 weist gegenüber der axialen Erstreckung S des Ventilschafts 11 einen Winkel auf, der von 90° abweicht. Der Ventilteller 12 ist also gegenüber der durch die axiale Erstreckung S des Ventilschafts 11 definierten Ebene geneigt. Diese Neigung ermöglicht es, dass der Ventilteller 12 geeignet ist, zwei Ventilauslasse wechselweise von einem Ventileinlass fluidisch zu verbinden bzw. zu trennen. Dabei bestimmt die Neigung des Ventiltellers 12 insbesondere auch den durchströmbaren Querschnitt von Ventileinlass bzw. der Ventilauslasse, so dass dieser Winkel für den durchführbaren Volumenstrom ebenso maßgeblich ist, wie für den dabei erforderlichen Bauraum in Richtung der Erstreckung S des Ventilschaftes.

Die Figur 2 zeigt eine Querschnittsdarstellung durch eines Ventilgehäuses 20 eines erfindungsgemäßen Schaltventils 9. Das Ventilgehäuse 20 weist eine vertikale Grundausrichtung, die der Ausrichtung des Ventilschaftes des nicht gezeigten Tellerventils 10 in dem Ventilführungsrohr 40 entspricht, auf. Das Anströmen des Fluidstromes, beispielsweise eines Abgasstromes, erfolgt lateral durch den Ventileinlass 23, der eine Mündung 44 in den Schaltring 22 aufweist. Der Schaltring 22 weist eine fassförmig in der Mitte nach außen gewölbte Innenfläche 43 auf, an der die geschliffene Kante 16 des Ventiltellers 12 anliegen kann. Die Form der Wölbung der Innenfläche 43 ergibt sich somit aus dem Winkel des Ventiltellers gegenüber dem Ventilschaft 11 und dem Durchmesser des Ventiltellers. Der Ventilteller 12 liegt mit seinem gesamten Rand dichtend an der Innenfläche 43 an und kann diese beim Verdrehen des Tellerventils bestreichen und an der Innenfläche entlang gleiten.

Beidseitig des Schaltrings 22 sind die Ventilkammern 25 und 26 ausgebildet, wobei jeweils ein Ventilauslass 24a bzw. 24b an den Ventilkammern ausgebildet ist. Beim dargestellten Ausführungsbeispiel erfolgt über die Ventilauslasse 24a, 24b jeweils ein laterales Ausströmen des Fluidstroms, wobei hierbei die Fluidströme parallel ausgerichtet aber durch die Höhe des Schaltrings vertikal versetzt angeordnet sind, was aber nicht zwangsläufig so gewählt werden muß. Die Abströmrichtung von den Ventilkammern 25, 26 kann an die konstruktiven Erfordernisse der Verwendung des Ventils auch angepaßt werden und beispielsweise auch in voneinander abweichenden Richtungen erfolgen.

Der durch den Ventileinlass 23 ankommende Fluidstrom wird im Schaltring 22 durch den dort entsprechend dem Winkel schrägstehend angeordneten Ventilteller 12 und der Seite des Anströmens des Ventiltellers durch eine der Endflächen 45 in die entsprechend zugeordnete Ventilkammer 24a oder 24b geleitet. Die Mündung 44 erstreckt sich dabei radial in einem Öffnungswinkel in dem Schaltring 22, der kleiner ist als 180°. Durch diese Breite der Mündung 44 im Schaltring 22 wird vorgegeben, um welchen Winkel das Tellerventil 10 verdreht werden muß, damit die andere Seite des Ventiltellers 12 angeströmt wird und somit der Fluidstrom in eine andere Kammer geleitet werden kann. Das Schaltventil 9 kann dabei insbesondere als Proportionalventil ausgeführt sein. Befindet sich der Ventilteller 12 in einer Stellung, in der die Kante 16 des Ventiltellers im Bereich der Mündung 44 verläuft, so fließt jeweils ein Teilstrom beiderseits des Ventiltellers und somit in jeweils eine andere der Ventilkammern 25, 26. Durch Verdrehen des Tellerventils 10 um seinen Ventilschaft 11 kann der Flächenanteil der Mündung, die auf die Kante 16 Ventiltellers 12 begrenz werden, relativ zueinander verändert werden, wodurch auch das Verhältnis der Teilströme entsprechend verändert wird.

Die obere Ventilkammer 24 wird durch die Ventilkopftrennwand 28 von der Wasserkammer 27 abgetrennt, die im übrigen von der Gehäusewand 29 des Ventilgehäuses 20 begrenzt wird. Die Wasserkammer 27 wird von einer Kühlflüssigkeit durchströmt, wobei einerseits eine Kühlflüssigkeitszufuhr 46 und wenigstens ein Kühlmittelauslass 47 ausgebildet ist. Ist mehr als ein Kühlmittelauslass 47, die in verschiedenen Richtungen aus der Wasserkammer 72 herausführen, ausgebildet, so ist vorzugsweise nur einer am Kühlmittelkreislauf angeschlossen, während die anderen entsprechend fluiddicht verschlossen sind.

Die Wasserkammer 27 wird von dem Ventilführungsrohr 40 durchsetzt, das koaxial zur Ausrichtung des Schaltrings 22 ausgerichtet ist. In dem vom Kühlwasser der Wasserkammer 27 gekühlten Bereichs des Ventilführungsrohres 40 ist die Ringnut 41 ausgebildet. Die Ringnut dient der Aufnahme einer Dichtung 42, die zum Ventilschaft 11 hin abdichtet. Das Ventilführungsrohr 40 durchsetzt dabei sowohl die Ventilkopftrennwand 28 als auch die Gehäusewand 29.

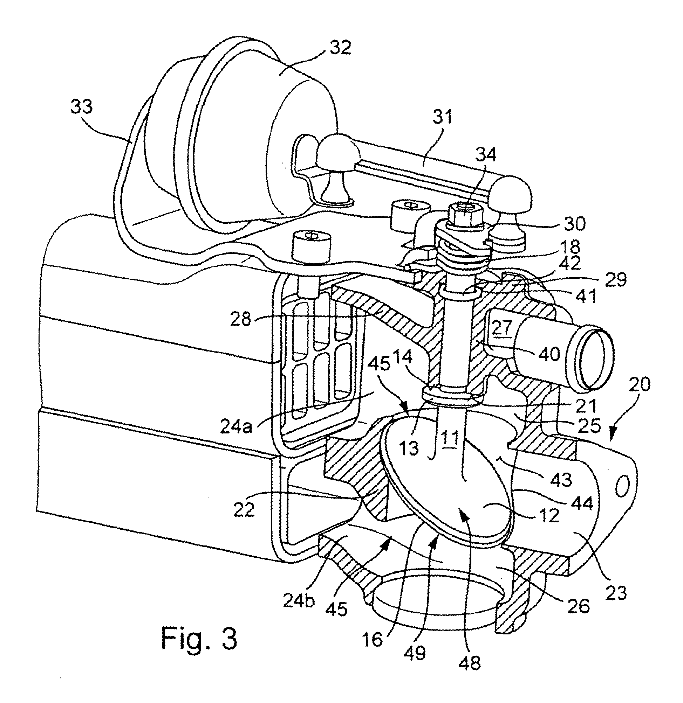

Die Figur 3 zeigt eine teilgeschnittene Darstellung eines erfindungsgemäßen Schaltventils 9 in einer Abgasrückführleitung einer Brennkraftmaschine, wobei der Abgasstrom wahlweise durch einen Wärmetauscher 39 oder einen Bypass 38 des Wärmetauschers geleitet wird. Das Schaltventil 9 kann dabei, je nach Ansteuerung der als Steller dienenden Unterdruckdose 32 als Proportionalventil oder als Zwei-Stellungsventil ausgebildet sein. Im Falle des Zwei-Stellungsventils wird der gesamte Abgasstrom entweder dem Bypass oder dem Wärmetauscher zugeführt, während im Falle des Proportionalventils ein beliebiger Teilstom dem Wärmetauscher zugeführt werden kann und der verbleibende Reststrom durch den Bypass geleitet wird.

Die Unterdruckdose 32 ist dabei über den Halter 33 bezüglich dem Ventilgehäuse 20 feststehend angeordnet. Über die Betätigungsstange 31, die bei Hüben der Unterdruckdose 32 eine im wesentlichen axiale Stellbewegung ausführt, ist die Unterdruckdose 32 mit dem Betätigungshebel 30 gekoppelt. Dieser ragt axial von dem Ventilschaft 12 ab und ist über den Formabschnitt 17 verdrehsicher am Ventilschaft 12 gehalten. Die Mutter 34 ist über das Gewinde 15 am Ventilschaft 12 gehalten und fixiert den Betätigungshebel 30 in axialer Richtung des Ventilschafts 12. Dabei ist die Drehfeder 18 zwischen dem Ventilgehäuse 20 und dem Betätigungshebel 30 angeordnet. Die Drehfeder ist dabei einerseits am Ventilgehäuse 20 und andererseits am Betätigungshebel 30 abgestützt. Ein Verdrehen des Tellerventils 10 aus einer Betätigungsausgangslage heraus erfolgt gegen die Wirkung der Drehfeder 18, die somit auch der Definition und dem Aufrechterhalten der Betätigungsausgangslage bei unbetätigter Unterdruckdose 32 dient.

Die Drehfeder 18 ist zusätzlich als Spiralfeder ausgeführt, die um den Ventilschaft 11 herum angeordnet ist. Sie ist auch in axialer Richtung des Ventilschafts 11 einerseits am Ventilgehäuse 20 und andererseits am Ventilschaft bzw. am Betätigungshebel 30, der am Ventilschaft 11 festgelegt ist, abgestützt. Die Drehfeder 18 ist vorgespannt und übt demgemäß in axialer Richtung des Ventilschafts 11 eine Zugkraft auf diesen aus. Der Ventilschaft 11 wird also im Sinne eines Herausziehens aus dem Ventilgehäuse 20 beaufschlagt. Hierdurch wird insbesondere die spaltfreie Anlage der Radialfläche 14 des am Ventilschaft 11 in entsprechender Position radial abragenden Bundes 13 an der Anlagefläche 21 am Ende des Ventilführungsrohres 40 erreicht. Durch die in axialer Richtung wirkende Kraft der Drehfeder 18 wird auch eine gut definierte Positionierung des Ventiltellers 12 im Schaltring erzeugt.

Der Ventilschaft 11 ist im Ventilführungsrohr 40 geführt gehalten. Das Ventilführungsrohr 40 durchsetzt die von einer Kühlflüssigkeit durchströmte Wasserkammer 27, die durch die Gehäusewand 29 und die Ventilkopftrennwand 28 zwischen Wasserkammer 27 und Ventilkammer 25 begrenzt wird. Im Bereich der Gehäusewand 29, sehr nahe an der Wasserkammer 27, ist im Inneren die Ringnut 41 im Ventilgehäuse ausgeformt in welcher eine Dichtung 42 gehalten ist, die den Spalt zwischen Ventilschaft 11 und Ventilführungsrohr 40 abdichtet. Ein fluiddichter Abschluss der Ventilkammer 45 wird geschaffen. Die Dichtung 42 ist zusätzlich zu der spaltfreien Anlage des Bundes 13 an der Anlagefläche 21 des Ventilführungsrohres vorhanden. Die Dichtung ist daher in dem vom Kühlmittel sehr gut gekühlten Bereich des Ventilführungsrohres 40 und des Ventilgehäuses 20 angeordnet und dadurch vor thermischer Überlastung geschützt.

Der Ventilteller 12 des Tellerventils 11 ist im Schaltring 22 geführt gehalten, wobei der Schaltring 22 die ganze Außenkontur des Ventiltellers umschließt. Die Außenkontur wird dabei durch die an der gewölbten Innenfläche 43 anliegende geschliffene Kante 16 des Ventiltellers 12 gebildet, die beiderseits in eine Phase übergehen kann, an die sich dann die im wesentlichen ebene Unterseite 49 und die im wesentlichen parallel zur Unterseite 49 verlaufende Oberseite 48 anschließt. An der Oberseite 48 fußt im Mittelpunkt des Ventiltellers 12 der Ventilschaft 11, wobei zwischen der Flächennormalen N und der axialen Erstreckung S ein Winkel besteht.

In der in Figur 3 dargestellten Betätigungsendlage ist der Ventilteller 12 im Schaltring 22 so ausgerichtet, dass die gesamte Mündung 44 des Ventileinlasses 23 im Schaltring 22 auf der von der Oberseite 48 des Ventiltellers 12 begrenzten Seite liegt. Durch die Anlage des Ventiltellers 12 an der gewölbten Innenfläche 43 des Schaltring 22 ist die fluidische Verbindung zur Ventilkammer 26 und zum Ventilauslass 24b, der im vorliegenden Fall zu dem Bypass 38 führt, gesperrt. Der gesamte durch die Mündung 44 in den Schaltring 22 einströmende Fluidstrom wird durch die Oberseite 48 des Ventiltellers 12 umgelenkt und durch die Endfläche 25 hindurch in die Ventilkammer 25 geleitet. Er gelangt dort zum Ventilauslass 24a und durchströmt dann den Wärmetauscher 39 des durch das Schaltventil 9 schaltbaren Abgaswärmetauscher.

Befindet sich das Tellerventil 10 in seiner Betätigungsausgangslage, so ist das Tellerventil gegenüber der gezeigten Betätigungsendlage um 180° verschwenkt, so dass die Mündung 44 des Ventileinlasses allein der Ventilunterseite 49 zugewandt ist. Der gesamte Fluidstrom wird dann durch die andere Endfläche 45 in die Ventilkammer 26 und damit zum Bypass 39 geleitet. Bei Zwischenstellungen des Tellerventils 10 wird jeweils ein den Flächenverhältnissen der Mündung 44, die der Oberseite 48 bzw. der Unterseite 49 zugewandt sind, entsprechender Teilstrom des Fluidstroms den beiden Ventilkammern 25, 26, den Ventilauslassen 24a, 24b und damit dem Bypass 38 und dem Wärmetauscher 39 zugeführt.

## Patentansprüche

1. Abgaswärmetauscherschaltventil für schaltbare Abgaswärmetauscher mit einem Ventilgehäuse (20), wobei ein Ventileinlass (23)oder eine Mehrzahl von Ventileinlässen (23) zum Abgaswärmetauscherschaltventil und zumindest ein Ventilauslass (24a, 24b) oder ein Mehrzahl von Ventilauslässen (24a, 24b) aus dem Ventilgehäuse hinaus zum Durchleiten einer Fluidströmung durch das Abgaswärmetauscherschaltventil ausgebildet sind, **dadurch gekennzeichnet, dass** ein im Ventilgehäuse (20) geführt gehaltenes Tellerventil (10) als Ventilsteller vorgesehen ist, wobei das Tellerventil (10) aus einem Ventilschaft (11) und einem Ventilteller (12) besteht, wobei zwischen der Flächennormalen (N) des Ventiltellers und der Erstreckungsrichtung (S) des Ventilschafts (11) ein Winkel (α) gegeben ist, wobei im Ventilgehäuse (20) koaxial zu einem Schaltring (22) ein Ventilführungsrohr (40) ausgebildet ist, in dem der Ventilschaft (11) geführt und um seine Mittelachse verschwenkbar gehalten ist und das Ventilführungsrohr (40) eine Ventilkopftrennwand (28) und eine Gehäusewand (29) durchsetzt, wobei zwischen Ventilkopftrennwand (28) und Gehäusewand (29) eine von Kühlflüssigkeit durchströmte Wasserkammer (27) ausgebildet ist.

2. Abgaswärmetauscherschaltventil nach Anspruch 1, **dadurch gekennzeichnet, dass** der Winkel (α) zwischen 20° und 80° und vorzugsweise im Bereich von 45° bis 85° liegt.

3. Abgaswärmetauscherschaltventil nach einem der Ansprüche 1 oder 2, **dadurch gekennzeichnet, dass** der Ventilteller (12) eine mechanisch bearbeitete, wie beispielsweise geschliffene, Kanten (16) aufweist.

4. Abgaswärmetauscherschaltventil nach einem der vorhergehenden Ansprüche, **dadurch gekennzeichnet, dass** der Ventilteller (12) in einem Schaltring (22) des Ventilgehäuses (20), in dessen Innenraum der Ventileinlass (23) und die Ventilauslasse (24a,24b) zumindest mittelbar einmünden, angeordnet ist, wobei der Schaltring (22) koaxial zum Ventilschaft (11) ausgerichtet ist, und dass zwischen dem Ventileinlass (23) und den Ventilauslassen (24a,24b) am Schaltring (22) jeweils ein Winkel von vorzugsweise 90° besteht, wobei die Ventilauslasse (24a,24b) einander gegenüberliegend, punktsymmetrisch zum Mittelpunkt des Schaltrings (22) einmünden.

5. Abgaswärmetauscherschaltventil nach Anspruch 4, **dadurch gekennzeichnet, das** einer der Winkel in einem Bereich von 75° bis 100° liegt.

6. Abgaswärmetauscherschaltventil nach Anspruch 4, **dadurch gekennzeichnet** der Schaltring (22) eine fassförmig gewölbte Innenfläche (43), die den Innenraum begrenzt und an der die Kante (16) des Ventiltellers (12) anliegt, aufweist.

7. Abgaswärmetauscherschaltventil nach einem der Ansprüche 4 oder 6, **dadurch gekennzeichnet, dass** der Schaltring (22) offene, in Ventilkammern (25,26) des Ventilgehäuses (20) mündende Endflächen (45) aufweist, wobei jede der Ventilkammern (25,26) einen Ventilauslass (24a,24b) aufweist und wobei der Ventileinlass (23) in dem Schaltring (22) mündet.

8. Abgaswärmetauscherschaltventil nach Anspruch 7, **dadurch gekennzeichnet, dass** der Ventilteller (12) die beiden Ventilkammern (25,26) im Schaltring (22) fluidisch voneinander trennt.

9. Abgaswärmetauscherschaltventil nach Anspruch 1, **dadurch gekennzeichnet, dass** am Ventilschaft (11) ein Bund (13) ausgebildet ist, wobei der Bund (13) an einer Anlagefläche (21) des Ventilführungsrohrs (40) spaltfrei und insbesondere in axialer Richtung kraftbeaufschlagt anliegt.

10. Abgaswärmetauscherschaltventil nach Anspruch 9, **dadurch gekennzeichnet dass** im Bereich der Wasserkammer (27) zwischen Ventilschaft (11) und Führungsrohr (40) eine Dichtung (42) angeordnet ist, wobei vorzugsweise in dem Führungsrohr (40) eine Ringnut (41) zur Aufnahme der Dichtung (42) ausgebildet ist.

11. Abgaswärmetauscherschaltventil nach einem der vorhergehenden Ansprüche, **dadurch gekennzeichnet, dass** der Ventilschaft (11) aus dem Ventilgehäuse (20) herausragt, wobei vom Ventilschaft (11) ein Betätigungshebel (30) radial abragt und am Betätigungssteller eine linear arbeitende Betätigungsstange (31) eines axial arbeitenden Stellelements, wie einer Unterdruckdose (32), angreift.

12. Abgaswärmetauscherschaltventil nach Anspruch 11, **dadurch gekennzeichnet, dass** um den aus dem Ventilgehäuse (20) herausragenden Abschnitt des Ventilschafts (11) herum eine Feder, wie beispielsweise Drehfeder (18), angeordnet ist, die einerseits am Ventilgehäuse (20) und andererseits am Betätigungshebel (30) abgestützt ist und das Tellerventil (10) in Richtung einer Betätigungsausgangslage beaufschlagt.

13. Abgaswärmetauscherschaltventil nach Anspruch 12, **dadurch gekennzeichnet, dass** die Drehfeder (18) als Spiralfeder ausgeführt ist, wobei die Spiralfeder das Tellerventil (10) in axialer Richtung im Sinne eines Herausziehens des Ventilschafts (11) aus dem Ventilgehäuse (20) axial kraftbeaufschlagt.

14. Abgaswärmetauscherschaltventil nach einem der Ansprüche 5 bis 11, **dadurch gekennzeichnet, dass** die Öffnungsweite des Ventileinlasses (23) im Schaltring einen Winkelbereich zwischen 150° und 180° umfasst.

15. Abgaswärmetauscherschaltventil nach einem der vorhergehenden Ansprüche, **dadurch gekennzeichnet, dass** das Tellerventil (10) im Ventilgehäuse (20) um die Mittelachse des Ventilschaftes (11) zwischen einer Betätigungsausgangslage und einer Betätigungsendlage verschwenkbar gehalten ist, wobei der Schwenkwinkel zwischen Betätigungsausgangslage und Betätigungsendlage vorzugsweise zwischen 150° und 180° liegt.

16. Abgaswärmetauscherschaltventil nach Anspruch 15, **dadurch gekennzeichnet, dass** das Abgaswärmetauscherschaltventil (9) alternativ entweder die Betätigungsendlage oder die Betätigungsausgangslage einnimmt.

17. Abgaswärmetauscherschaltventil nach Anspruch 15, **dadurch gekennzeichnet, dass** das Abgaswärmetauscherschaltventil (9) ein Proportionalventil ist.

18. Abgaswärmetauscherschaltventil nach einem der Ansprüche 13 bis 15, **dadurch gekennzeichnet, dass** durch den Ventileinlass (23) einströmendes Fluid in der Betätigungsausgangslage vollständig durch einen Ventilauslass (24b) und in der Betätigungsendlage vollständig durch den anderen Ventilauslass (24a) aus dem Ventilgehäuse ausströmt.

19. Abgaswärmetauscherschaltventil nach einem der vorhergehenden Ansprüche, **dadurch gekennzeichnet, dass** zur Betätigung des Schaltventils (9) Betätigungskräfte von weniger als 10 N, insbesondere von 1 bis 2 N erforderlich sind.

20. Verwendung eines Abgaswärmetauscherschaltventils (9) nach einem der vorhergehenden Ansprüche zum Schalten zwischen zwei Abgaskanälen eines Abgaswärmetauschers (39), **dadurch gekennzeichnet, dass** der erste Abgaskanal einen Wärmetauscher (39) enthält und der zweite Kanal ein Bypass (38) zu dem Wärmetauscher ist, wobei sich die Abgaskanäle vorzugsweise unmittelbar an die Ventilauslässe (24a, 24b) anschließen.

21. Abgaswärmetauscher (39) mit zumindest einem Abgaswärmetauscherschaltventil (9) nach einem der vorhergehenden Ansprüche.

## Claims

1. Exhaust gas heat exchanger valve for switchable exhaust gas heat exchangers with a valve housing (20), a valve inlet (23) or a plurality of valve inlets (23) into the exhaust gas heat exchanger valve and at least one valve outlet (24a, 24b) or a plurality of valve outlets (24a, 24b) out of the valve housing being formed to carry a fluid flow through the exhaust gas heat exchanger valve,
**characterised in that**
a poppet valve (10) mounted in the valve housing (20) is provided as a valve disk, the poppet valve (10) consisting of a valve stem (11) and a valve disk (12), there being an angle (α) between the surface normal (N) of the valve disk (12) and the direction of extension (S) of the valve stem (11), a valve stem guide (40) being Formed in the valve housing (20) coaxial to a control ring (22) in which the valve stem (11) is mounted and can be pivoted about its centre axis, and the valve stem guide (40) passing through a valve block partition wall (28) and a housing wall (29), a water chamber (27) with a coolant flowing through it being formed between valve block dividing wall (28) and housing wall (29).

2. Exhaust gas heat exchanger valve in accordance with claim 1,
**characterised in that**
the angle (α) lies between 20° and 80° and preferably within a range of 45° to 85°.

3. Exhaust gas heat exchanger valve in accordance with one of claims 1 or 2,
**characterised in that**
the valve disk (12) has machined, for example ground edges (16).

4. Exhaust gas heat exchanger valve in accordance with one of the preceding claims,
**characterised in that**
the valve disk (12) is positioned in a control ring (22) of the valve housing (20) into the interior of which the valve inlet (23) and valve outlets (24a, 24b) discharge at least indirectly, the control ring (22) being oriented coaxially to the valve stem (11), and there is an angle of preferably 90° at the control ring (22)between the valve inlet (23) and the valve outlets (24a, 24b), the valve outlets (24a, 24b) discharging opposite one another, point symmetrical to the mid-point of the control ring (22).

5. Exhaust gas heat exchanger valve in accordance with claim 4,
**characterised in that**
one of the angles lies within a range of 75° to 100°.

6. Exhaust gas heat exchanger valve in accordance with claim 4,
**characterised in that**
the control ring (22) has an inner surface (43) curved in the manner of a barrel which delimits the interior and adjacent to which lies the edge (16) of the valve disk (12).

7. Exhaust gas heat exchanger valve in accordance with one of claims 4 or 6,
**characterised in that**
the control ring (22) has open end faces (45) which discharge into valve chambers (25, 26) of the valve housing (20), each of the valve chambers (25, 26) having a valve outlet (24a, 24b) and the valve inlet (23) discharging into the control ring (22).

8. Exhaust gas heat exchanger valve in accordance with claim 7,
**characterised in that**
the valve disk (12) separates the two valve chambers (25, 26) from one another fluidically in the control ring (22).

9. Exhaust gas heat exchanger valve in accordance with claim 1,
**characterised in that**
formed on the valve stem (11) is a collar (13), said collar (13) lying adjacent to a bearing surface (21) of the valve stem guide (40) without a gap and in particular subject to forces in an axial direction.

10. Exhaust gas heat exchanger valve in accordance with claim 9,
**characterised in that**
positioned in the area of the water chamber (27) between valve stem (11) and valve stem guide (40) is a seal (42), an annular channel (41) for receiving the seal (42) preferably being formed in the stem guide (40).

11. Exhaust gas heat exchanger valve in accordance with one of the preceding claims,
**characterised in that**
the valve stem (11) projects out of the valve housing (20), an actuating lever (30) projecting radially from the valve stem (11) and engaging a linearly operating actuating bar (31) of an axially operating actuator such as a vacuum capsule (32) at the actuating disk (32).

12. Exhaust gas heat exchanger valve in accordance with claim 11,
**characterised in that**
positioned around the section of the valve stem (11) projecting from the valve housing (20) is a spring such as a torsion spring (18), for example, which is supported on one hand on the valve housing (20) and on the other on the actuating lever (30) and strikes the poppet valve (10) in the direction of an initial actuating position.

13. Exhaust gas heat exchanger valve in accordance with claim 12,
**characterised in that**
the torsion spring (18) is designed as a flat coil spring, the flat coil spring applying force axially to the poppet valve (10), i.e. drawing the valve stem (11) out of the valve housing (20).

14. Exhaust gas heat exchanger valve in accordance with one of claims 5 to 11,
**characterised in that**
the aperture width of the valve inlet (23) in the control ring includes an angle range of between 150° and 180°.

15. Exhaust gas heat exchanger valve in accordance with one of the preceding claims,
**characterised in that**
the poppet valve (10) is mounted in the valve housing (20) such that it is able to pivot about the centre axis of the valve stem (11) between an initial actuating position and a final actuating position, the angle of pivoting between the initial actuating position and the final actuating position lying between 150° and 180°.

16. Exhaust gas heat exchanger valve in accordance with claim 15,
**characterised in that**
the exhaust gas heat exchanger valve (9) alternately takes up either the final actuating position or the initial actuating position.

17. Exhaust gas heat exchanger valve in accordance with claim 15,
**characterised in that**
the exhaust gas heat exchanger valve (9) is a proportional valve.

18. Exhaust gas heat exchanger valve in accordance with one of claims 13 to 15,
**characterised in that**
all the fluid flowing in through the valve inlet (23) in the initial actuating position flows out through one valve outlet (24b) and all the fluid flowing in through the valve inlet (23) in the final actuating position flows out through the other valve outlet (24a).

19. Exhaust gas heat exchanger valve in accordance with one of the preceding claims,
**characterised in that**
forces of less than 10N, in particularly of 1 to 2N, are required to actuate the valve (9).

20. Use of an exhaust gas heat exchanger valve (9) in accordance with one of the preceding claims for switching between two exhaust gas channels of an exhaust gas heat exchanger (39),
**characterised in that**
the first exhaust gas channel contains a heat exchanger (39) and the second channel is a bypass (38) to the heat exchanger, the exhaust gas channels preferably connecting directly to the valve outlets (24a, 24b).

21. Exhaust gas heat exchanger (39) having at least one exchange gas heat exchanger valve (9) in accordance with one of the preceding claims.

## Revendications

1. Soupape de commande d'un échangeur thermique de gaz d'échappement pour des échangeurs thermiques de gaz d'échappement commutables, avec un boîtier de soupape (20), une entrée de soupape (23) ou une pluralité d'entrées de soupapes (23) vers la soupape de commande de l'échangeur thermique de gaz d'échappement et au moins une sortie de soupape (24a, 24b) ou une pluralité de sorties de soupape (24a, 24b) hors du boîtier de soupape étant conçues pour le passage d'une circulation de fluide à travers la soupape de commande de l'échangeur thermique de gaz d'échappement, **caractérisée en ce que**, une soupape à disque (10) maintenue en étant guidée dans le boîtier de soupape (20) est prévue en tant qu'actionneur de soupape, la soupape à disque (10) comprenant une tige de soupape (11) et un disque de soupape (12), alors qu'entre la normale (N) à la surface du disque de soupape et le sens d'extension (S) de la tige du disque de soupape (11), existant un angle (α) et dans le boîtier de soupape (20) un tube de guidage de la soupape (40), dans lequel la tige de soupape (11) est guidée et maintenue de façon à pouvoir pivoter autour de son axe médian est conçu de façon coaxiale à une bague de commande (22) et le tube de guidage de la soupape (40) traverse une paroi de séparation du disque de soupape (28) et une paroi du boîtier (29), une chambre à eau (27) dans laquelle circule un fluide de refroidissement étant agencée entre la paroi de séparation du disque de soupape (28) et la paroi du boîtier (29).

2. Soupape de commande d'un échangeur thermique de gaz d'échappement selon la revendication 1, **caractérisée en ce que** l'angle (α) se situe entre 20° et 80° et de préférence dans une plage comprise entre 45° et 85°.

3. Soupape de commande d'un échangeur thermique de gaz d'échappement selon l'une quelconque des revendications 1 ou 2, **caractérisée en ce que** le disque de soupape (12) comporte une arête (16) usinée mécaniquement, par exemple rectifiée.

4. Soupape de commande d'un échangeur thermique de gaz d'échappement selon l'une quelconque des revendications précédentes, **caractérisée en ce que** le disque de soupape (12) est disposé dans une bague de commande (22) du boîtier de soupape (20) dans l'espace intérieur de laquelle l'entrée de soupape (23) et les sorties de soupape (24a, 24b) débouchent au moins indirectement, la bague de commande (22) étant orientée de façon coaxiale à la tige de soupape (11) et **en ce que**, entre l'entrée de soupape (23) et les sorties de soupape (24a, 29b), il est constitué sur la bague de commande (22) à chaque fois un angle de préférence de 90°, les sorties de soupape (24a, 24b) débouchant en étant mutuellement opposées, par symétrie centrale par rapport au point médian de la bague de commande (22).

5. Soupape de commande d'un échangeur thermique de gaz d'échappement selon la revendication 4, **caractérisée en ce que** l'un des angles se situe dans une plage comprise entre 75° et 100°.

6. Soupape de commande d'un échangeur thermique de gaz d'échappement selon la revendication 4, **caractérisée en ce que** la bague de commande (22) comprend une surface intérieure (43) voûtée en forme de fût, qui délimite l'espace intérieur et sur lequel l'arête (16) du disque de soupape (12) s'applique.

7. Soupape de commande d'un échangeur thermique de gaz d'échappement selon l'une quelconque des revendications 4 ou 6, **caractérisée en ce que** la bague de commande (22) comporte des surfaces d'extrémité (45) ouvertes, débouchant dans des chambres de soupape (25, 26) du boîtier de soupape (20), chacune des chambres de soupape (25, 26) comportant une sortie de soupape (24a, 24b) et l'entrée de soupape (23) débouchant dans la bague de commande (22).

8. Soupape de commande d'un échangeur thermique de gaz d'échappement selon la revendication 7, **caractérisée en ce que** le disque de soupape (12) sépare les deux chambres de soupape (25, 26) au niveau du fluide dans la bague de commande (22).

9. Soupape de commande d'un échangeur thermique de gaz d'échappement selon la revendication 1, **caractérisée en ce que** sur la tige de soupape (11) est conçu un collet (13), le collet (13) s'appliquant sans former d'interstice sur une surface d'appui (21) du tube de guidage de la soupape (40), tout en étant notamment soumis à une force en direction axiale.

10. Soupape de commande d'un échangeur thermique de gaz d'échappement selon la revendication 9, **caractérisée en ce que** dans la zone de la chambre à eau (27), entre la tige de soupape (11) et le tube de guidage (40) est disposé un joint (42), une rainure annulaire (41) pour loger le joint (42) étant conçue de préférence dans le tube de guidage (40).

11. Soupape de commande d'un échangeur thermique de gaz d'échappement selon l'une quelconque des revendications précédentes, **caractérisée en ce que** la tige de soupape (11) dépasse du boîtier de soupape (20), un levier d'actionnement (30) partant en direction radiale de la tige de soupape (11) et une barre d'actionnement (31) fonctionnant de façon linéaire d'un dispositif de commande fonctionnant en direction radiale, tel qu'un boîtier à dépression (32), s'engageant sur l'organe d'actionnement.

12. Soupape de commande d'un échangeur thermique de gaz d'échappement selon la revendication 11, **caractérisée en ce que**, autour de la partie de la tige de soupape (11) dépassant hors du boîtier de soupape (20) est disposé un ressort, tel que par exemple un ressort de torsion (18), qui s'appuie d'une part sur le boîtier de soupape (20) et d'autre part sur le levier d'actionnement (30) et qui contraint la soupape à disque (10) dans le sens d'une position de sortie d'actionnement.

13. Soupape de commande d'un échangeur thermique de gaz d'échappement selon la revendication 12, **caractérisée en ce que** le ressort de torsion (18) est réalisé sous la forme d'un ressort en spirale, le ressort en spirale soumettant axialement la soupape à disque (10) à une force, en direction axiale, dans le sens d'un retrait de la tige de soupape (11) hors du boîtier de soupape (20).

14. Soupape de commande d'un échangeur thermique de gaz d'échappement selon l'une quelconque des revendications 5 à 11, **caractérisée en ce que** la largeur d'ouverture de l'entrée de soupape (23) dans la bague de commande (22) comprend une plage angulaire comprise entre 150° et 180°.

15. Soupape de commande d'un échangeur thermique de gaz d'échappement selon l'une quelconque des revendications précédentes, **caractérisée en ce que** la soupape à disque (10) est maintenue dans le boîtier de soupape (20) autour de l'axe médian de la tige de soupape (11), en étant susceptible de pivoter entre une position de départ d'actionnement et une position de fin d'actionnement, l'angle de pivotement entre la position de départ d'actionnement et la position de fin d'actionnement se situant de préférence entre 150° et 180°.

16. Soupape de commande d'un échangeur thermique de gaz d'échappement selon la revendication 15, **caractérisée en ce que** la soupape de commande d'échangeur thermique de gaz d'échappement (9) adopte alternativement soit la position de fin d'actionnement ou la position de départ d'actionnement.

17. Soupape de commande d'un échangeur thermique de gaz d'échappement selon la revendication 15, **caractérisée en ce que** la soupape de commande d'échangeur thermique de gaz d'échappement (9) est une soupape proportionnelle.

18. Soupape de commande d'un échangeur thermique de gaz d'échappement selon l'une quelconque des revendications 13 à 15, **caractérisée en ce que** du fluide pénétrant à travers l'entrée de soupape (23) s'écoule hors du boîtier de soupape (20), entièrement par une sortie de soupape (24b) dans la position de départ d'actionnement et entièrement par l'autre sortie de soupape (24a) dans la position de fin d'actionnement.

19. Soupape de commande d'un échangeur thermique de gaz d'échappement selon l'une quelconque des revendications précédentes, **caractérisée en ce que** pour l'actionnement de la soupape de commande (9), des forces de manoeuvre inférieures à 10 N, notamment de 1 à 2 N sont nécessaires.

20. Utilisation d'une soupape de commande d'échangeur thermique de gaz d'échappement (9) selon l'une quelconque des revendications précédentes pour la commande entre deux conduits de gaz d'échappement d'un échangeur thermique des gaz d'échappement (39), **caractérisée en ce que** le premier conduit de gaz d'échappement contient un échangeur thermique (39) et le deuxième conduit est une dérivation (38) vers l'échangeur thermique, les conduits de gaz d'échappement se raccordant de préférence directement sur les sorties de soupape (24a, 24b).

21. Échangeur thermique de gaz d'échappement (39) avec au moins une soupape de commande d'échangeur thermique de gaz d'échappement (9) selon l'une quelconque des revendications précédentes.
